# EUROPEAN PATENT APPLICATION

(11) **EP 1 220 508 A1**
(43) Date of publication of application: **03.07.2002**
(21) Application number: 00128692.1
(22) Date of filing: 29.12.2000
(51) Int. Cl.: H04L 29/06

(54) **Method for transmitting data packets in a cellular communication network**

(71) Applicant: TELEFONAKTIEBOLAGET LM ERICSSON (publ), 126 25 Stockholm (SE)
(72) Inventor: Hameleers, Heino, 6471 VN Kerkrade (NL); Hundscheidt, Frank, 6463 BK Kerkrade (NL); Witzel, Andreas, 52134 Herzogenrath (DE); Ritterbecks, Arndt, 6369 HC Simpelveld (NL); Masmanidis, Ioannis, 52062 Aachen (DE)
(74) Representative: Mohsler, Gabriele

(57) **Abstract**

The invention introduces a method for transmitting data packets of a call in a communication network, an edge node, a communication network and a computer program for performing said method.

In the invented method, packets are sent between two edge nodes, wherein a first edge node removes redundant headers and replaces them by a new header, defined for the transmission of data packets between the edge nodes. Information that is necessary for the rebuilding of the removed headers is sent on a different path to the edge nodes, once, and stored in said edge nodes.

## Description

### Field of invention

The invention relates to a method for transmitting data packets of a call in a communication network. The invention further relates to an edge node, a communication network and a computer program for performing said method.

### Description of prior art

The increasing traffic in communication networks introduces an increasing demand for the efficient and flexible handling of data within networks. One way to achieve this, is the use of packet switching technology within communication networks. In packet switching technology, a connection is not set up by switching a circuit, but the user payload is sent as data packets through a network.

The evolution of second generation telecommunication networks like GSM (Global System for Mobile communication) to third generation telecommunication networks like UMTS (Universal Mobile Telecommunication System) increases this demand.
One way to implement packet switching technology is the use of IP (Internet Protocol) based networks.

A problem in packet switched technology networks is to fulfil Quality of Service requirements for real time services as for example voice calls. Quality of Service requirements are for example delay, bandwidth or jitter. In opposite to circuit switched networks, it is not generally possible to predict a delay caused by the transmission between subscribers.

MPLS (Multi Protocol Label Switching) is one mechanism to fulfil quality of service requirements. MPLS simplifies the forwarding function of routers using connection oriented label switching mechanisms inside the otherwise connectionless IP technology.

MPLS therefor introduces the concept of label switching paths for both individual and aggregated traffic streams.

Label switching paths are virtual paths, set up within a MPLS domain based on topology information provided by routing protocols, for example OSPF (Open shortest path first). To support different quality of service requirements the concept of forwarding equivalence classes is introduced into the MPLS standard. A forwarding equivalence class is a class of packets with the same forwarding behaviour for example: routing, forwarding, and queuing. For each forwarding equivalence class a label switching path is defined within the MPLS domain.

An MPLS domain consists of label edge routers and label switching routers. Label edge router analyse the IP header of a data packet to determine which label switched path to use and adds a corresponding local label switch path identifier to the packet in form of the label. Label switching router route a data packet according to the label switched path identifier.

A label switching router negotiates a label for each forwarding equivalence class with its up and down stream nodes along the according path within the MPLS domain. Said negotiation is initiated by the upstream label switching router by requesting a label from its downstream label switching router for a given forwarding equivalence class.
To inform label switching routers about the result of the negotiation a set of procedures and messages is defined in a label distribution protocol.

Traffic classes are identified in an MPLS domain through a class of service code in the MPLS frame header.

MPLS can be extended to support differentiated services to enable fast routing and switching as well as packet handling differentiation according to the required quality of service.

A common UDP/IP (User Datagram Protocol/Internet Protocol) header has a size of 28 octets and an RTP header has a size of 12 octets. A typical voice sample has a size of between 20-50 octets depending on the codec used. This leads to the situation that the payload of between 20-50 octets, is accompanied by a header with a size of 40-80 octets. Existing approaches to improve the relation between payload and header size are header compression and multiplexing. In the case of header compression headers are compressed from for example 40 octets to about 5 octets. A shortcoming of the header compression is that it is rather processor consuming.

In the case of multiplexing a number of payload frames are multiplexed into one set of UDP/IP headers. Multiplexing however introduces quite some complexity in the edge routers. A further shortcoming is the introduction of additional delay by the multiplexing. It is therefore object for the invention to provide operators with a faster, more efficient and less complex method for sending data packets within communication networks.

### Summary of the invention

This is achieved advantageously by the teaching of claim 1, claim 14, claim 15, and claim 16.

It is advantageous that according to claim 1 a header of a data packet is replaced by an inter edge node header. An inter edge node header comprises information about the required quality of service and local routing information and by that it is much shorter then a data packet header.

Further advantageous embodiments can be derived from the depended claims.
Especially advantageous is a connection between edge nodes can be used for a plurality of calls according to claim 4.

Further advantageous is that the inter edged node header comprises a call identification cording to claim 5. This enables to distinguish packets belonging to different calls in a very simple way.

Further advantageous is the extraction of destination information from a header by one of the edge nodes. This enables to use the method in a network without bearer independent call control.

It is advantageous that the selection of a connection between nodes is based on quality of service requirements for the call according to claim 8. This enables to handle calls with different quality of service requirements differently.

Further advantageous is the use of a MPLS protocol between the edge nodes. The use of the standardised method enables interworking of nodes from different manufacturers.

Furthermore MPLS is adapted to fulfil the requirements in an advantageous way.

Further advantageous is to remove headers of UDP, IP or RTP (real time protocol). The headers of the protocols are very common in packet switched systems and not necessary to route data packets between edge nodes. In a preferred embodiment of the invention the communication network is a cellular telecommunication network. Said network comprises an ATM based access network, for example a UTRAN (UMTS terrestrial radio access network), a core network separated into network control layer and connectivity layer. The network control layer provides call control functionality as, for example provision of services, call set-up etc. The connectivity layer transports the user payload and is controlled by the network control layer. The connectivity layer is implemented as an MPLS domain. In an embodiment of the invention the connectivity layer uses only MPLS header to route packets between the edge nodes of the core network.

In a first embodiment a call control network node analyses destination information for data packets of a call. That destination information may, for example, be received in a call request message, e.g. in form of a called subscriber number or an IP address. The determination of the first and the second edge node can be part of a call set up procedure.

In an embodiment of the invention the call control network node defines a call identification for data packets of the call. The call control network nodes ends the destination information and the call identification to the first and the second edge node. The edge nodes receive and store the destination information and the call identification. The edge nodes select a connection among them and determine a header for routing packets on said connection.

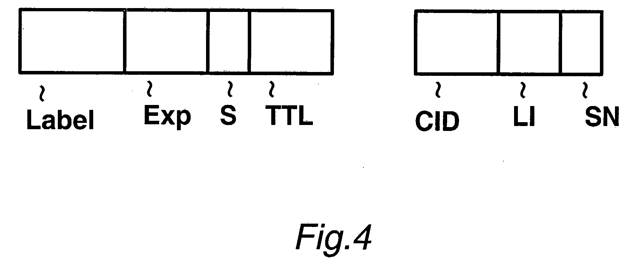

In a preferred embodiment of the invention said header is an MPLS shim header comprising a label, for example a 20 bit label value, 3 experimental bits, a bottom of stack bit wherein a one defines the last entry in the label stack, and an 8 bit time to live section. The header also comprises a so called mini header comprising a 8 bit call ID, a length information, and a sequence number of the voice packet for example 3 bits long. The header is explained in more detail in figure 4.

It should be noted that the mini header is not created from an incoming UDP/IP header, but is created nearly based on out-band signalling information sent and received on the call control layer. It should be noted also that the sequence number is optional.

In a preferred embodiment of the invention, a header for routing packets beyond the edge nodes is determined by the call control network node. Said header is based on information about the calling and the called party and information about the protocols used beyond the edged nodes. Said header may be, for example an UDP/IP and/or RTP header.

The selection of the connection between the edge nodes is based on information about the required quality of service, and information about the topology of the network.
In a further embodiment of the invention, the steps performed by the call control network node, can be performed by either of the edge nodes.

In a preferred embodiment an edge node performs for each packet that is received from beyond the edge nodes the steps of removing at least one the header, adding the inter edge node header to the packet and sending said packet to the respective other edge node. For each packet received from the respective other edge node the steps of removing the inter edge node header, adding a header to the packet that is used to route the packet beyond the edge nodes, and sending said packet to a receiver beyond the edge nodes, are performed.

Towards the calling party, a receiver beyond the edge nodes may be for example a node of an access network, a node of a further network, or a subscriber. The same applies for a receiver in the direction of the called party.

In a preferred embodiment of the invention, the determination of quality of service requirements for the call and the sending of said quality of service requirements to the edge node is performed by the call control network node.

In a preferred embodiment of the invention, the connection between edge nodes is adapted to transmitting data packets for a plurality of calls.

In an embodiment of the invention beyond at least one of the edge nodes UDP/IP and RTP protocols are used for routing data packets.

In a preferred embodiment of the invention the communication network is set up according to GSM or UMTS standards. At least one of the edge nodes is one of a media gateway, a mobile services switching centre, a gateway mobile switching centre, a GPRS (General packet radio service) support node, a radio network controller, a radio base station, or a base station controller. The core control network node, is one of a mobile services switching centre, a gateway mobile services switching centre, a GPRS support node, a mobile services switching centre server, or a gateway mobile services switching centre server.

### Brief description of the drawings

The following figures show:
Fig. 1: depicts a part of an exemplary payload connection comprising to edge nodes,
Fig. 2: depicts a schematic of the logic structure of a connection between two edge nodes,
Fig. 3: depicts a schematic of an edge node, and
Fig. 4: depicts a schematic of a data packet with an inter edge node header.

### Detailed description of embodiments

In the following the invention is described in more detail by means of figures and embodiments.

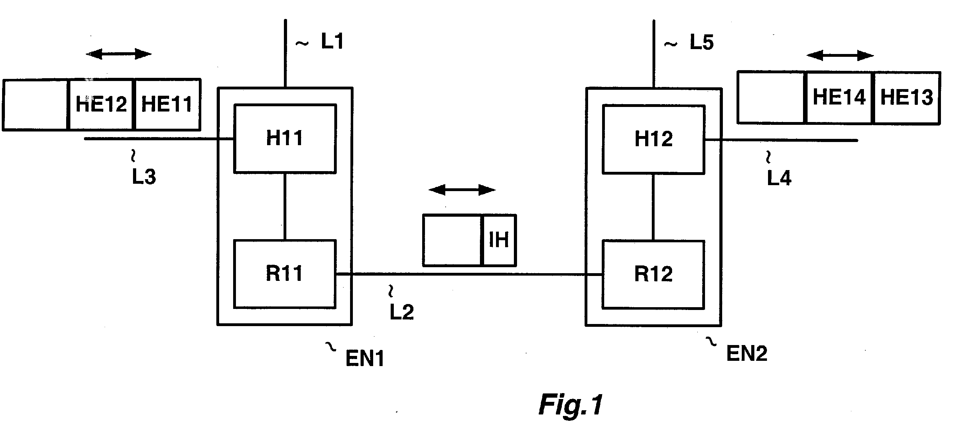

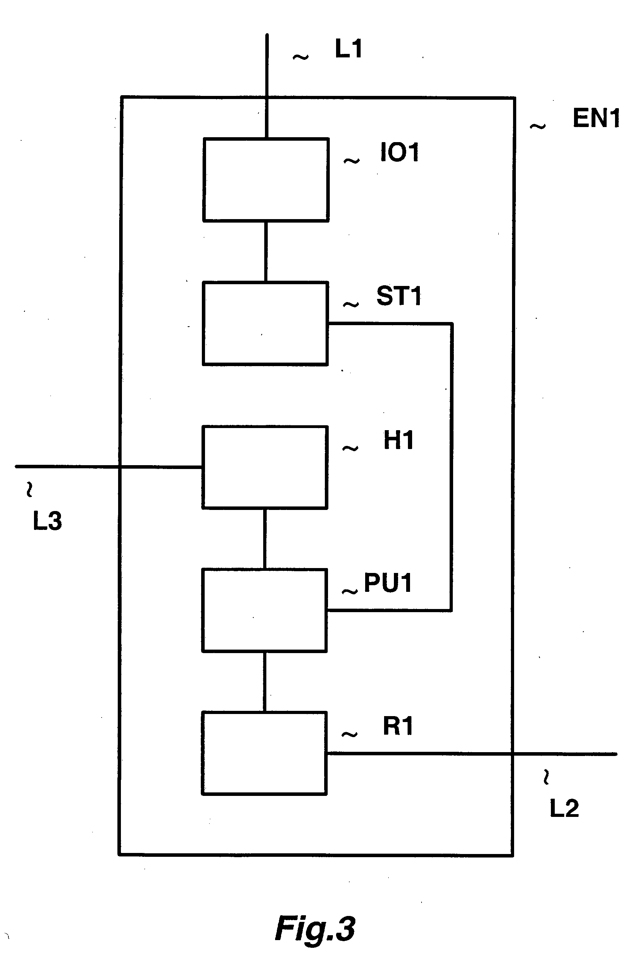

Figure 1 depicts a part of a payload connection comprising two edge nodes, the first edge node EN1 and a second edge node EN2. Each of the edge nodes comprises a host H11 or H12 and a router R11 or R12. A host may be any processing unit, adapted to receiving packets from beyond the edge nodes. In a preferred embodiment, a host further performs voice handling like voice compression, transcoding, and packeting of voice data. Further elements of the edge nodes are left out for simplicity reasons but can be determined from fig. 3.

The first edge node EN1 receives and sends data packets beyond the edge nodes via a connection L3 in the host H11. The data packets comprise two headers HE11 and HE12, for example UDP/IP header and RTP header. The first edge node EN1 receives information from a call control network node (not depicted) via a connection L1.

The second edge node EN2 sends and receives data packets beyond the edge nodes via a connection L4 in the host H12. The data packets also comprise two headers HE14 and HE13. It receives information from a call control network node via a connection L5. Both edge nodes EN1 and EN2 send and receive data packets among each other via a connection L2 by the router R11 or R12 respectively. On the connection L2, the headers used beyond the edge nodes HE11, HE12, HE13 and HE14 are replaced by an inter edge node header IH.

In a preferred embodiment, the connection L2 is implemented as an MPLS connection.

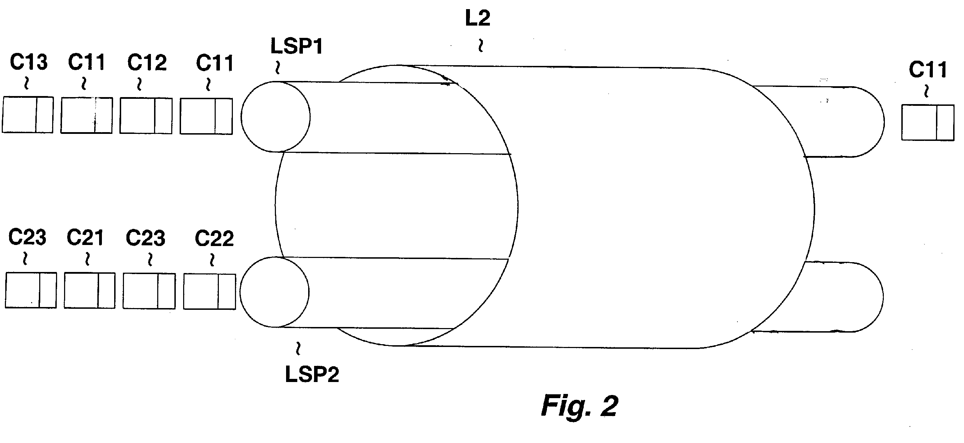

Figure 2 depicts a schematic of a logic structure of a connection between two edge nodes. Figure 2 depicts an inter edge node connection L2, for example an MPLS connection, comprising two label switch path LSP1 and LSP2. Each of the label switched paths LSP1, LSP2 transports a data packet stream. The first label switching path LSP1 transports packets for the calls C11, C12, and C13. The second label switching path LSP2 transports packets for the calls C21, C22, and C23. For better understanding the label switching path LSP1 and LSP2 are depicted as tubes. It should be noted, that said label switching paths are logical paths within a connection network between two edge nodes . They should by no means be mistaken for circuit switched connections.

The first label switching path LSP1 transports packets for a forwarding equivalence class defined for and adapted to the transportation of packets with low delay and minor data security. The second label switching path, transports packets for a second forwarding equivalence class defined for and adapted to the transportation of packets with lower requirements regarding delay and higher demands for data security.

Figure 3 depicts a schematic of an edge node EN1. The edge node EN1 comprises an input output unit 101, a storage ST1, a host H1, a processing unit PU1 comprising a first and a second packed handling unit, and a router R1. The input output unit IO1 receives information from a call control network node via a connection L1, the storage ST1 stores said information and makes it available to the processing unit PU1. The host H1 sends and receives packets via connection L3 from a further network entity.

In the implementation depicted in figure 3, a first and a second packet handling unit are implemented within the processing unit PU1. The processing unit controls the edge node and its components. The first packet handling unit handles packets received by the host and to be sent by the router. The first packet handling unit receives packets from the host H1, removes the header from said packet, determines a call the packet belongs to by analysing the header it removed, and adds an inter edge node header, that comprises a call identification of the call. Afterwards it forwards the packet to the router R1.

The second packet handling unit receives packets from the router R1, modifies them and forwards them to the host H1. The second packet handling unit therefore removes an inter edge node header from the packet, analyses said header, determines the call the packet belongs to by analysing the call identification, and adds a header used for routing the packet beyond the edge nodes.

At least parts of the first and the second packet handling unit can be implemented in the host or in the router or in both.

The router R1 receives packets via a connection L2 from a further edge node. It forwards received packets to the second packet handling unit. In the opposite direction the router receives packets from the first packet handling unit and sends them to the further edge node.

Figure 4 depicts a schematic of a data packet with an inter edge node header. Depicted is an inter edge node header compressing an MPLS shim header and a so-called mini header. The MPLS shim header comprises a label value label for example 20 bits length an experimental 3 bit section Exp a bottom of stack bit S and an 8 bit time to live section TTL. An time to live section includes a time value, either absolute or relative, indicating up to which time a packet shall be routed in a network. If the time is extended, the packet will be deleted if it is received in a network entity.

In a further embodiment of the invention, the MPLS shim header is redundant, and therefore not part of an inter edge not header.

The mini header comprises a call identification CID of for example 8 bits length, a length LI, and a sequence number SN of for example 3 bits length.

In an embodiment of the invention, the sequence number is not part of the inter edge node header.
In a preferred embodiment of the invention the method is implemented for controlling a telecommunication network with bearer independent call control. In telecommunication networks with bearer independent call control the set up and controlling of a call can be performed independent from the set up and routing of user pay load. In the preferred embodiment the call control is performed on a control layer by call control network nodes and payload is switched on a connectivity layer by pay load transmission nodes.

In a first step, destination information for packets of a call is received in a call control network node. The call control network node analyses the destination information and selects at least a first edge node. The set up of the call is performed as known to a person skilled in the art. During or after the selection of payload transmission entities as the first and the second edge node the destination information is transmitted to said edge nodes. In a preferred embodiment of the invention, a call identification is defined by the call control network node and sent to the edge nodes.

In a further embodiment of the invention a call identification is defined by one of the edge nodes and transmitted to the respective other edge node. In an embodiment of the invention the edge nodes receive and store the destination information and the call identification.

In a preferred embodiment of the invention, the call control network node analyses a call request regarding quality of service requirements and transmits said quality of service requirements together with the call identification. The first edge node analyses the quality of service requirements and selects a forwarding equivalence class that fulfils the requirements.

In an embodiment of the invention the forwarding equivalence class is transmitted to network entities between the edge nodes by a class of service code in an MPLS frame header.

In a preferred embodiment of the invention the first edge nodes elects a label switching path adapted to perform a transmission according to the forwarding equivalence class. The label switching path is a connection between the first and the second edge router. It is adapted to transmit data packets comprising payload for a plurality of calls, said calls distinguished by the call identification.

In a further embodiment of the invention, the method is implemented in a network without bearer independent call control. The steps of the call control network node and of the first edge node can be performed by single node in that case.

In another embodiment of the invention, the steps performed by the call control network node and the steps performed by the first edge node, are performed by different nodes, however, the node performing the call control network node functionality transmits data packets comprising user payload.

The invention can be implemented as software that controls at least one node of a telecommunication network by performing a method as described in one of the claims.

## Claims

1. Method for transmitting data packets of a call in a communication network, wherein a connection between a first and a second edge node forms part of a route said packets take within the cellular communication network, the network comprising at least one call control network node that performs call control functions, the method comprising the following steps:
- receiving and storing destination information for packets of said call,
- receiving and storing a call identification for said call,
- selecting an connection between the edge nodes,
- determining a header for routing packets beyond the edge nodes, the header contents being based on the destination information,
- determining an inter edge node header for packets sent between the edge nodes,
- performing in an edge node for each packet of said call that is received from beyond the edge nodes the steps of:
- removing a header that is used to route a packet beyond the edge nodes from each packet received that comprises data of said call,
- adding the inter edge node header to said packet,
- sending said packet to the respective other edge node,
- performing in an edge node for each packet of said call that is received from the respective other edge node the steps of:
- removing the inter edge node header,
- adding a header to the packet that is used to route the packet beyond the edge nodes, and
- sending said packet to a receiver beyond the edge nodes.

2. Method according to claim 1, wherein the edge nodes perform the following steps:
- receiving and storing destination information for packets of said call,
- receiving and storing a call identification for said call,
- receiving quality of Service requirements for said call,
- selecting an connection to the respective other edge node,
- determining a header for routing packets beyond the edge nodes, the header contents being based on the destination information,
- determining or receiving an inter edge node header for packets sent between the edge nodes,
- performing for each packet of said call that is received from beyond the edge nodes the steps of:
- removing a header that is used to route a packet beyond the edge nodes from each packet received that comprises data of said call,
- adding the inter edge node to said packet,
- sending said packet to the respective other edge node,
- performing for each packet of said call that is received from the respective other edge node the steps of:
- removing the inter edge node header,
- adding a header to the packet that is used to route the packet beyond the edge nodes, and
- sending said packet to a receiver beyond the edge nodes.

3. Method according to claim 1 or 2, wherein the call control network node performs the steps of:
- assigning a call identification to said call,
- selecting two edge nodes,
- sending said call identification to the edge nodes,
- determining destination information for packets of said call,
- sending said destination information to the edge nodes,
- determining Quality of Service requirements for the call, and
- sending said Quality of Service requirements to the edge nodes.

4. Method according to claim 1, 2 or 3, wherein the connection between edge nodes is adapted to transmitting data packets for a plurality of calls.

5. Method according to any of the preceding claims, wherein the inter edge node header comprises the call identification.

6. Method according to claim 5, wherein the inter edge node header further comprises at least one of a length indicator, a sequence number, or a further header for a protocol that is used between said edge nodes.

7. Method according to any of the preceding claims, wherein at least one of the edge nodes performs the step of extracting destination information from a header of one of data packets received for a call.

8. Method according to any of the preceding claims, wherein the selection of the connection between the edge nodes is based on Quality of Service requirements for the call.

9. Method according to any of the preceding claims, wherein a MPLS (Multi-Protocol Label Switching) protocol is used between the edge nodes.

10. Method according to any of the preceding claims, wherein an edge node removes a header of at least one of following protocols: UDP (User Datagram Protocol), IP (Internet Protocol), or RTP (Real-Time Protocol).

11. Method according to any of the preceding claims, wherein the communication network is set up according to GSM or UMTS standards.

12. Method according to any of the preceding claims, wherein an edge node is one of a media gateway, a mobile services switching centre, a gateway mobile services switching centre, a GPRS (General Packet Radio Service) support node, a radio network controller, a radio base station, or a base station controller.

13. Method according to any of the preceding claims, wherein the call control node is one of a mobile services switching centre, a gateway mobile services switching centre, a GPRS support node, a mobile services switching centre server, or a gateway mobile services switching centre server.

14. An edge node, comprising:
- an input output unit for receiving information from a call control node,
- a storage for storing said information,
- a host sending and receiving packets according to an internet protocol,
- a router sending and receiving data packets according to an MPLS protocol,
- a first packet handling unit, handling packets received by the host and to be sent by the router with means for,
- removing a header from a packet received by the host
- determining a call the packet belongs to by analysing the header,
- adding an inter edge node header, comprising a call identification of said call,
- a second packet handling unit, handling packets received by the router and to be sent by the host with means for,
- removing an inter edge node header from packets received by the router,
- determining the call the packet belongs to by analysing the call identification,
- adding a header used for routing the packet, and
- a processing unit controlling the edge node and its components.

15. A cellular telecommunication network wherein data packets are transmitted in a way according to a method as defined by any of the preceding claims.

16. A computer program, stored on a computer readable medium or presented in a form that can be loaded into the memory of a computer, that is adapted to control a computer or a node of a cellular telecommunication network in a way that said computer or node performs a method according to any of the claims 1 to 11.
